# EUROPÄISCHE PATENTSCHRIFT

(11) **EP 2 655 004 B1**
(45) Veröffentlichungstag und Bekanntmachung des Hinweises auf die Patenterteilung: **31.01.2018**
(21) Anmeldenummer: 11804547.5
(22) Anmeldetag: 19.12.2011
(51) Int. Cl.: B23K 13/00, B23K 13/01, B23K 13/04, B32B 15/04

(54) **HOCHFREQUENZSCHWEIßEN VON SANDWICHBLECHEN**
HIGH-FREQUENCY WELDING OF SANDWICH METAL SHEETS
SOUDAGE HAUTE FRÉQUENCE DE TÔLES SANDWICH

(30) Priorität: 21.12.2010 DE 102010061454
(43) Veröffentlichungstag der Anmeldung: 30.10.2013
(73) Patentinhaber: ThyssenKrupp Steel Europe AG, 47166 Duisburg (DE)
(72) Erfinder: KLEIER, Axel Joachim, 45894 Gelsenkirchen (DE); WISCHMANN, Stefan, 10437 Berlin (DE); PLHA, Jens, 40468 Düsseldorf (DE)
(74) Vertreter: Cohausz & Florack
(86) Internationale Anmeldenummer: PCT/EP2011/073228
(87) Internationale Veröffentlichungsnummer: WO 2012/084815

(56) Entgegenhaltungen:
- WO-A1-96/04099
- WO-A1-97/48515
- WO-A2-2006/014963
- DE-A1- 4 221 251
- DE-U1-202004 015 836
- JP-A- 58 154 469
- JP-A- 61 123 478
- US-A- 5 510 597

## Beschreibung

Die Erfindung betrifft ein Verfahren zum Verschweißen eines ersten Verbundblechteils umfassend mindestens zwei Metallschichten und eine zwischen beiden Metallschichten angeordnete Schicht die aus einem Material mit einer anderen chemischen Zusammensetzung als die beiden Metallschichten besteht, mit einem zweiten Blechteil bestehend aus einem metallischen Vollmaterial oder einem weiteren Verbundwerkstoff mit mindestens zwei Metallschichten und einer zwischen den Metallschichten angeordneten Schicht die aus einem Material mit einer anderen chemischen Zusammensetzung als die beiden Metallschichten besteht. Darüber hinaus betrifft die Erfindung ein geschweißtes Halbzeug und eine geschweißte Blechkonstruktion hergestellt mit dem erfindungsgemäßen Verfahren.

Verbundblechteile bestehen aus einem Verbundwerkstoff mit mindestens einer zwischen mindestens zwei Metallschichten angeordneten Schicht, die aus einem Material mit einer anderen chemischen Zusammensetzung als die beiden Metallschichten besteht. Diese Zwischenschicht kann auch eine unterschiedliche Wärmeleitfähigkeit, Dichte, Schmelz- und Verdampfungspunkt, Festigkeit und/oder elektrischer Leitfähigkeit als die beiden Metallschichten besitzen. Zur Erzielung eines leichteren Aufbaus können im Kraftfahrzeugbau Verbundwerkstoffe mit einer Zwischenschicht beispielsweise aus Kunststoff verwendet werden. Häufig werden diese in Form von sogenannten Sandwichblechen gefertigt. Derartige Sandwichbleche weisen eine hohe Dämpfung von Körperschallwellen auf und eignen sich daher sowohl zur Luftschalldämmung als auch zur Körperschalldämmung beispielsweise von Motoren. Die Kernschicht der Verbundblechteile kann einen viskoelastischen Kunststoff aufweisen, welcher die Schwingungen aufnimmt. Bei der Übertragung der Schwingungen wieder ans Blech, wird ein großer Teil der Schwingungsenergie in Wärme umwandelt, so dass die Schallwellen gedämpft werden. Besondere Einsatzgebiete dieser Verbundblechteile sind Ölwannen, Ventil- und Getriebedeckel sowie beispielsweise Stirnwände. Allerdings sind auch andere Einsatzgebiete denkbar, beispielsweise zur Einhausung von Schallquellen. Um entsprechende Bauteile zur Verfügung zu stellen, müssen die Verbundblechteile mit mindestens zwei Metallschichten und einer zwischen beiden Metallschichten angeordneten Zwischenschicht beispielsweise Kunststoffschicht mit anderen Bauteilen gefügt werden können. Prinzipiell kommen hierzu die Fügeverfahren wie Schutzgasschweißen, Laserstrahlschweißen oder Löten in Frage. Allerdings wird bei hohem Wärmeeintrag die Kunststoffschicht in Mitleidenschaft gezogen bzw. in den Schweißzonenbereichen zerstört. Aus der Offenlegungsschrift DE 42 21 251 A1 ist ein Verfahren zum Verschweißen von Blechteilen bestehend aus einem Verbundwerkstoff umfassend mindestens zwei Metallschichten und eine zwischen beiden Metallschichten angeordnete Kunststoffschicht bekannt, bei welchem dieses Verbundblechteil mit einem Vollblech unter Verwendung eines Laserschweißens verbunden wird. Laserschweißvorrichtungen sind allerdings nicht nur sehr kostenintensiv sondern zerstören die Kunststoffschicht im Bereich der Schweißnaht unmittelbar, so dass eine porenfreie Schweißverbindung nur mit erheblichem Aufwand erzielt werden kann. Eine nahezu porenfreie Schweißverbindung ist aber notwendig, um eine hohe Schweißnahtqualität und damit eine hohe Betriebsfestigkeit und Korrosionsbeständigkeit der Schweißnaht zu gewährleisten.

Hiervon ausgehend hat sich die vorliegende Erfindung die Aufgabe gestellt, ein Verfahren zum Verschweißen von Verbundblechteilen umfassend mindestens zwei Metallschichten und eine zwischen beiden Metallschichten angeordnete Schicht, die aus einem Material mit einer anderen chemischen Zusammensetzung als die beiden Metallschichten besteht, mit einem zweiten Blechteil bestehend aus einem metallischen Vollmaterial oder einem weiteren Verbundwerkstoff mit mindestens zwei Metallschichten und einer zwischen den Metallschichten angeordneten Schicht, die aus einem Material mit einer anderen chemischen Zusammensetzung als die beiden Metallschichten besteht, zur Verfügung zu stellen, mit welchem mit hoher Prozesssicherheit porenfreie Schweißverbindungen hergestellt werden können. Darüber hinaus soll ein geschweißtes Halbzeug und eine geschweißte Blechkonstruktion mit porenfreien Schweißnähten vorgeschlagen werden.

Gemäß einer ersten Lehre der vorliegenden Erfindung wird die oben aufgezeigte Aufgabe dadurch gelöst, dass die Blechteile unter Verwendung eines Hochfrequenzschweißverfahrens verschweißt werden.

Beim Hochfrequenzschweißen wird ein hochfrequenter Wechselstrom im Verbundblechteil erzeugt. Dieser wird aufgrund des Skin-Effekts und des Proximity-Effekts auf der Oberfläche des Blechteils transportiert. Nur so ist es gezielt möglich, eine Konzentration der Stromführung auf der Oberfläche der Kanten der Bleche des Verbundblechteils durch sehr hohe Stromdichten zu erzeugen, welche eine selektive und sehr starke Erwärmung der Blechkanten zur Folge hat, so dass die Kantenbereiche der Verbundblechteile mit anderen Blechkanten anderer Verbundblechteile oder Blechteilen aus Vollmaterial miteinander gefügt werden können. Die zwischen den Metallschichten angeordnete Schicht, die aus einem Material mit einer anderen chemischen Zusammensetzung als die beiden Metallschichten besteht, vorzugsweise eine Kunststoffschicht wird nicht primär, wie beispielsweise beim Laserschweißen, sondern lediglich sekundär über die erhitzen Metallschichten erwärmt. Hierdurch wird erreicht, dass die Zwischenschicht, vorzugsweise die Kunststoffschicht nicht in dem Ausmaße wie beim Laserschweißen zerstört bzw. verdampft wird. Da prinzipbedingt eine geringere Menge an beispielsweise Kunststoff verdampft, kann im Ergebnis eine nahezu porenfreie Schweißverbindung beim Verschweißen von Verbundblechteilen mit anderen Verbundblechteilen oder Blechen aus Vollmaterial erzielt werden.

Gemäß einer ersten Ausgestaltung des erfindungsgemäßen Verfahrens wird das Hochfrequenzschweißverfahren konduktiv oder induktiv durchgeführt. Bei einem konduktiven Hochfrequenzschweißverfahren wird ein Hochfrequenzstrom über einen elektrischen Kontakt in die zu verschweißenden Metallbauteile bzw. in die zu verschweißenden Kantenbereiche der Metallbauteile eingeleitet. Im Gegensatz dazu erfolgt die Generierung des Hochfrequenzstroms im Metallbauteil beim induktiven Hochfrequenzschweißen kontaktlos über entsprechend angeordnete Induktionsleiter. Bei einem konduktiven Hochfrequenzschweißen werden beispielsweise Schleifkontakte verwendet.

Das Verbundblechteil und das zweite Blechteil können vorzugsweise bandförmig sein, wobei das Verschweißen der Blechteile bandweise kontinuierlich durchgeführt wird. Das Verbundblechteil und das zweite Blechteil werden hier durch Coils bestehend aus dem jeweiligen Verbund- oder Blechwerkstoff bereitgestellt, abgewickelt und kontinuierlich verschweißt. Hierdurch kann ein Tailored Strip bestehend aus einem ersten Verbundwerkstoff und einem Vollmaterial bzw. einem weiteren Verbundwerkstoff hergestellt werden. Das so hergestellte Tailored Strip kann zu einem Coil aufgehaspelt und dann für eine kostengünstige bandweise Fertigung von schalldämmenden Bauteilen verwendet werden.

Gemäß einer weiteren Ausgestaltung des erfindungsgemäßen Verfahrens erfolgt das Verschweißen im Stumpfstoß oder im T-Stoß. Bei beiden Schweißverbindungen kann ausgenutzt werden, dass über das Hochfrequenzschweißen die Kantenbereiche des Verbundblechteils besonders gut erwärmt werden können und mit anderen Blechteilen verschweißt werden, ohne dass die Zwischenschicht, vorzugsweise die Kunststoffschicht stark beeinträchtigt wird.

Bevorzugt werden die Kantenoberflächen des Verbundblechteils und die der weiteren Blechteile an den Schweißstoßkanten auf eine Temperatur erwärmt, so dass die Metallschichten mindestens plastifiziert sind. In diesem Zustand werden die Blechteile mit einer Kraft derart gegeneinander gedrückt, dass der mindestens plastifizierte metallische Werkstoff des ersten Verbundblechteils senkrecht zur einwirkenden Kraft verdrängt wird. Die Verdrängung des metallischen Werkstoffes kann nach außen und/oder nach innen erfolgen. Diese Verdrängung der Bestandteile des Verbundblechteils ergibt die Möglichkeit, dass Verbundblechteil mit dem zweiten Blechteil derart in Kontakt zu bringen, dass auf einfache Weise die beispielsweise zurückweichende Zwischenschicht, vorzugsweise die Kunststoffschicht des Verbundblechteils in direkten Kontakt mit dem zweiten Blechteil gelangen kann. Hierdurch wird die Prozesssicherheit, mit welcher eine porenfreie Schweißnaht erzeugt werden kann, weiter erhöht.

Ist das erste Blechteil mit einem zweiten Blechteil aus einem metallischen Vollmaterial im Stumpfstoß verschweißt und wird der metallische Werkstoff des zweiten Blechteils in die Zwischenschicht, vorzugsweise die Kunststoffschicht und gegen die Metallschicht des Verbundwerkstoffes des ersten Blechteils gestaucht, kann die Bildung von Poren und Lufteinschlüssen im Bereich der Schweißnaht auch beim Verschweißen von Verbundblechteilen mit Blechteilen aus Vollmaterial deutlich reduziert werden.

Eine optisch ansprechende Schweißnaht kann dann auf einfache Weise dadurch bereitgestellt werden, dass die entstandene Schweißnahtwulst mechanisch entfernt oder bearbeitet wird. Die Schweißnahtwulst kann beispielsweise lediglich abgeflacht oder vollständig durch beispielsweise ein Schleifverfahren entfernt werden.

Mit dem erfindungsgemäßen Verfahren können Verbundblechteile mit Blechteilen oder auch mit weiteren Verbundblechteilen für die verschiedensten Anwendungsbereiche dann bereitgestellt werden, wenn gemäß einer weiteren Ausgestaltung des erfindungsgemäßen Verfahrens das erste Blechteil aus Stahlschichten mit einer von Dicke 0,25 mm bis 1,5 mm und einer Kunststoffschicht mit einer Dicke von 20 µm bis 200 µm, vorzugsweise 80 µm bis 150 µm besteht. Diese Sandwichblechteile sind in sehr vielen Anwendungsgebieten, insbesondere im Kraftfahrzeugbau vielseitig einsetzbar. Durch das erfindungsgemäße Schweißverfahren erweitert sich dieses Anwendungsgebiet zusätzlich.

Gemäß einer zweiten Lehre der vorliegenden Erfindung wird die oben aufgezeigte Aufgabe durch ein geschweißtes Halbzeug, aufweisend mindestens ein erstes Blech aus einem Verbundwerkstoff mit zwei Metallschichten und einer zwischen beiden Metallschichten angeordneten Schicht, die aus einem Material mit einer anderen chemischen Zusammensetzung als die beiden Metallschichten besteht und ein zweites Blechteil aus metallischem Vollmaterial oder einem Verbundwerkstoff mit zwei Metallschichten und einer zwischen beiden Metallschichten angeordneten Schicht, die aus einem Material mit einer anderen chemischen Zusammensetzung als die beiden Metallschichten besteht, dadurch gelöst, dass das erste und das zweite Blechteil unter Verwendung des Hochfrequenzschweißverfahrens miteinander verschweißt sind. Wie bereits zuvor erläutert, ist die Schweißnahtqualität des Halbzeugs und der Blechkonstruktionen, welche mit dem erfindungsgemäßen Verfahren hergestellt worden sind, besonders hoch, da diese mit hoher Prozesssicherheit porenfrei gestaltet werden können. Hierdurch eröffnen sich für die geschweißten Halbzeuge und für daraus gefertigte Blechkonstruktionen weitere Anwendungsbereiche im Kraftfahrzeugbau aber auch in anderen Anwendungsgebieten.

Die Verbundbleichteile können einen symmetrischen als auch asymmetrischen Aufbau aufzeigen. Die geschweißten Halbzeuge können gleich dick oder unterschiedlich dick sein, wobei sie dann auf einer bzw. auf beiden Seiten einen Stufensprung aufweisen.

Weisen das Verbundblechteil und das zweite Blechteil aus unterschiedlichen Metall- oder Stahlwerkstoffen oder Metall- oder Stahlschichtdicken bestehende Metallschichten auf, kann das Halbzeug spezifisch auf unterschiedliche Anwendungsbereiche optimiert werden.

Schließlich wird die oben aufgezeigte Aufgabe durch eine Blechkonstruktion aufweisend ein erfindungsgemäßes Halbzeug dadurch gelöst, dass die geschweißte Blechkonstruktion ein luft- oder körperschalldämmendes Bauteil eines Kraftfahrzeugs ist. Wie bereits zuvor erwähnt, weisen die Verbundblechteile besonders hervorragende schall- bzw. körperschalldämmende Eigenschaften auf. Stirnwände, Bodenbleche, Ölwannen, etc. können so mit hoher Körperschall- bzw. Luftschalldämmung mit hoher Schweißnahtqualität hergestellt werden.

Im Weiteren soll die Erfindung anhand von Ausführungsbeispielen in Verbindung mit der Zeichnung näher erläutert werden. Die Zeichnung zeigt in
- Fig. 1a), b): in einer schematischen Schnittansicht die Feldlinienverteilung in den Kantenbereichen zweier zu fügenden Verbundblechteile bei Beaufschlagung mit einem Hochfrequenzstrom zum Zeitpunkt der Kontaktierung im Stumpfstoß bzw. vor der Kontaktierung,
- Fig. 2: ein Ausführungsbeispiel eines nach dem erfindungsgemäßen Verfahren hergestellter, gespeister Blechkonstruktion vor der mechanischen Bearbeitung,
- Fig. 3: die geschweißte Blechkonstruktion aus Fig. 2 nach einem mechanischen Bearbeiten der Schweißnaht,
- Fig. 4: die bandweise Verschweißung gemäß einem weiteren Ausführungsbeispiel des erfindungsgemäßen Verfahrens und
- Fig. 5a, b): ein weiteres Ausführungsbeispiel einer geschweißten Blechkonstruktion vor und nach der mechanischen Bearbeitung der Schweißnaht.

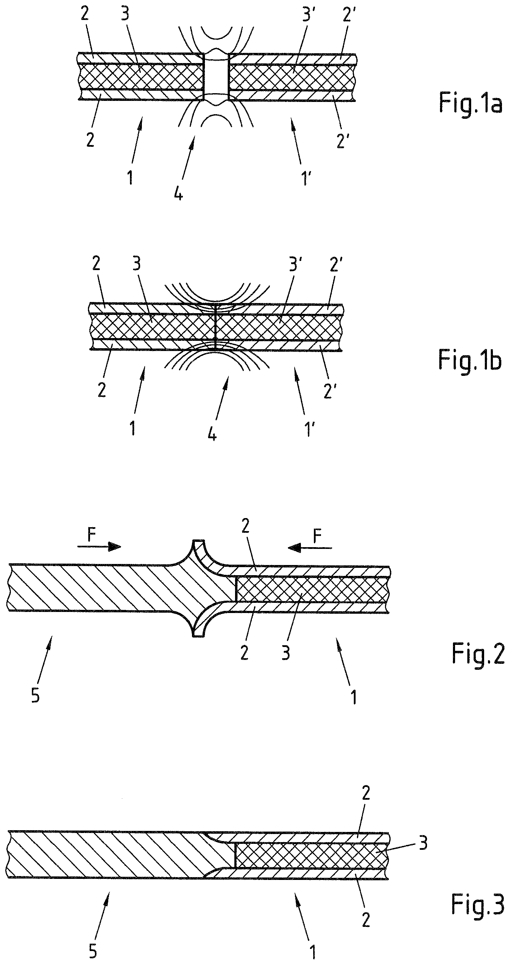

Fig. 1a), b) zeigt in einer schematischen Schnittansicht ein erstes und ein zweites Verbundblechteil 1, 1', welche jeweils zwei metallische Schichten 2, 2' und eine zwischen den metallischen Schichten angeordnete Kunststoffschicht 3, 3' aufweisen. Anstelle der in diesem Ausführungsbeispiel dargestellten Zwischenschicht aus Kunststoff 3, 3' kann auch eine beliebige Zwischenschicht 3, 3' angeordnet sein, deren chemische Zusammensetzung sich von den Metallschichten 2, 2' unterscheidet. In der Fig. 1a), b) sind die Metallschicht 2, 2' und die Kunststoffschicht 3, 3' nicht maßstäblich gezeichnet. Die Schichtdicken betragen für die Kunststoffschicht 3, 3' etwa 20 µm bis 200 µm und die Metallschicht 2, 2' etwa 0,25 mm bis 1,5 mm. Die Verbundblechteile 1, 1' sind mit einem Hochfrequenzstrom in unterschiedlichen Positionen vor und während der Kontaktierung miteinander beaufschlagt. Der Feldlinienverlauf 4 im Kantenbereich des Verbundblechteils zeigt, dass sich die Feldlinien an den Kantenbereichen konzentrieren und damit zu einer hohen Hochfrequenzstromdichte im Kantenbereich führen. Es ist erkannt worden, dass bei Beaufschlagung dieser Verbundblechteile 1, 1' mit einem Hochfrequenzstrom sich die Kantenbereiche der Metallschichten des Verbundblechteils besonders stark erwärmt werden. Der dazwischen liegende Kunststoff in der Kunststoffschicht 3, 3' wird nur sekundär durch die anliegenden Metallschichten 2, 2' erwärmt, d.h. er wird nur durch Wärmeleitung von den Metallschichten 2, 2' erwärmt. Eine unmittelbare Erhitzung der Kunststoffschicht 3, 3' wie sie beim Laserschweißen oder anderen Schweißverfahren auftritt, findet beim Hochfrequenzschweißen von Verbundblechteilen mit einer Kunststoffschicht nicht statt. Die sekundäre Erwärmung der Kunststoffschicht 3, 3' ist insofern von Vorteil, dass beim Verschweißen von Verbundblechteilen mit einem entsprechenden Sandwichaufbau ein vollständiges Verdampfen der Kunststoffschicht 3, 3' in der Schweißnaht verhindert werden kann. Die entstehende Schweißnaht kann damit ohne Poren und Lunker hergestellt werden.

Fig. 2 zeigt die Herstellung einer Schweißverbindung gemäß einem Ausführungsbeispiel des erfindungsgemäßen Verfahrens in dem ein Verbundblechteil 1 mit einem zweiten Blechteil 5, welches aus einem Vollmaterial besteht, verbunden wird. Nach Erwärmen der Kantenbereiche durch einen Hochfrequenzstrom, so dass diese plastifiziert sind, werden die Kanten im Stumpfstoß über eine Kraft F gegeneinander gedrückt, so dass die Metallschichten 2 des Verbundblechteils 1 nach außen verdrängt werden. Trotz der sekundären Erwärmung der Kunststoffschicht 3 kann nur ein nicht relevanter Teil der Kunststoffschicht verdampfen. Durch das Andrücken der beiden Blechteile 1 und 5 gegeneinander, wird der innere Teil des Blechteils 5 von innen gegen die Metallschichten 2 des Verbundblechteils 1 gedrückt. Aufgrund ihrer plastifizierten Konsistenz der Kanten der Metallschichten des Verbundblechteils und des zweiten Blechteils bildet sich eine stoffschlüssige Verbindung zwischen den Metallschichten des Verbundblechteils 1 und dem Metall des Blechteils 5 aus. Anschließend kann die Schweißnaht, welche mit hoher Prozesssicherheit nahezu porenfrei hergestellt werden kann, mechanisch bearbeitet, beispielsweise gehobelt werden. Als Resultat ergibt sich eine flache Schweißnaht mit einer Materialverteilung, wie sie in der schematischen Schnittansicht in Fig. 3 dargestellt ist. Die entsprechend aufgebaute Schweißnaht sorgt für eine außerordentlich belastbare Schweißverbindung zwischen einem Verbundblechteil 1 und einem Vollmaterialblech 5.

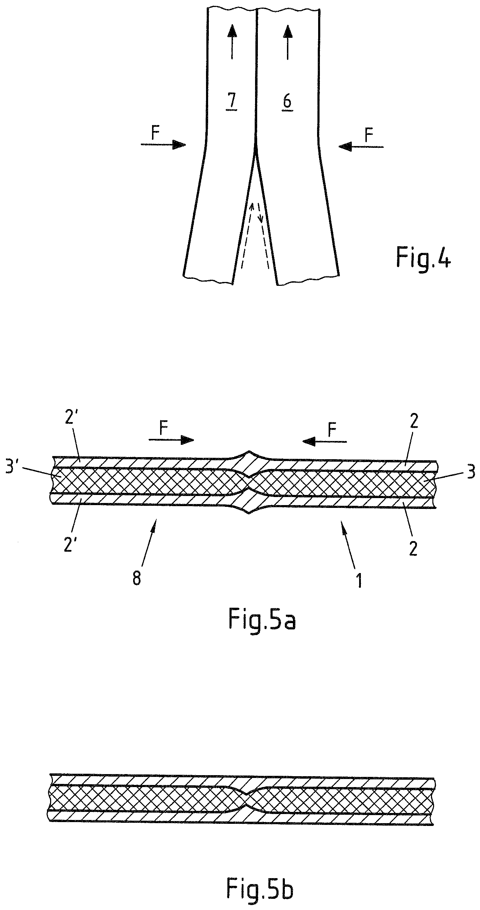

Schematisch ist in Fig. 4 das bandweise Verschweißen eines Bandmaterials 6 für ein Verbundblechteil 1 mit einem Bandmaterial 7 eines Blechteils aus Vollmaterial dargestellt. Über an den Kanten des Bandmaterials 7, 6 verlaufenden Hochfrequenzströmen kann eine einfache Verschweißung bandweise erfolgen, so dass mit hoher Wirtschaftlichkeit entsprechend geschweißte Halbzeuge bestehend aus einem Verbundblechteil 1 und beispielsweise einem Blechteil 5 aus Vollmaterial hergestellt werden. Die Bänder werden hierzu am Schweißpunkt beispielsweise unter Verwendung von seitlich angebrachten Rollen gegeneinander gedrückt, so dass die Kanten der Metallschichten des Bandes aus Verbundmaterial mit den Kanten des Bandes aus Vollmaterial verschweißen. Gleiches gilt selbstverständlich auch für das Verschweißen von zwei Verbundblechteilen, wie dies in Fig. 5a) und b) dargestellt ist.

In Fig. 5a) ist in einer schematischen Schnittansicht ein erstes Verbundblechteil 1 mit seinen Metallschichten 2 und der dazwischen liegenden Kunststoffschicht 3 während des Verschweißens dargestellt. Ein weiteres Verbundblechteil 8 mit Metallschichten 2' und einer dazwischen liegenden angeordneten Kunststoffschicht 3' wird unter Aufbringung der Kraft F im Kantenbereich nach dem Erwärmen mit einem Hochfrequenzstrom gegeneinander gepresst, so dass die äußeren Metallschichten nach außen verdrängt werden und gleichzeitig eine stoffschlüssige Verbindung eingehen. Die Kunststoffschichten 3 und 3' werden fest aneinander gepresst, so dass der beim Verschweißen unausweichlich verdampfende Kunststoff nicht zur Ausbildung von Poren führt. Anschließend kann die Schweißnaht, wie bereits in Fig. 3 dargestellt, mechanisch bearbeitet und die Schweißwulst entfernt werden, so dass ein geschweißtes Bauteil, wie es in Fig. 5b) in einer schematischen Schnittansicht dargestellt ist, hergestellt wird.

Die Verbindung von Verbundblechteilen mit Blechteilen aus Vollmaterial eröffnet weite Anwendungsbereiche der Verbundblechteile, insbesondere im Kraftfahrzeugbau im Bereich der Bodenbleche, Ölwannen, Stirnwände, etc..

## Patentansprüche

1. Verfahren zum Verschweißen eines ersten Verbundblechteils (1) umfassend mindestens zwei Metallschichten (2) und eine zwischen beiden Metallschichten angeordnete Kunststoffschicht (3), mit einem zweiten Blechteil (5) bestehend aus einem metallischen Vollmaterial oder einem weiteren Verbundblechteil (8) mit mindestens zwei Metallschichten (2') und einer zwischen den Metallschichten angeordneten Kunststoffschicht (3'),
**dadurch gekennzeichnet, dass**
die Blechteile unter Verwendung eines Hochfrequenzschweißverfahrens verschweißt werden, wobei beim Hochfrequenzschweißen ein hochfrequenter Wechselstrom im Verbundteil erzeugt wird.

2. Verfahren nach Anspruch 1,
**dadurch gekennzeichnet, dass**
das Hochfrequenzschweißverfahren konduktiv oder induktiv durchgeführt wird.

3. Verfahren nach Anspruch 1 oder 2,
**dadurch gekennzeichnet, dass**
das Verbundblechteil (1) und das zweite Blechteil (5, 8) bandförmig sind und das Verschweißen der Blechteile (1, 5, 8) bandweise kontinuierlich durchgeführt wird.

4. Verfahren nach einem der Ansprüche 1 bis 3,
**dadurch gekennzeichnet, dass**
das Verschweißen im Stumpfstoß oder im T-Stoß erfolgt.

5. Verfahren nach einem der Ansprüche 1 bis 4,
**dadurch gekennzeichnet, dass**
die Kantenoberflächen des Verbundblechteils und die der weiteren Blechteile an den Schweißstoßkanten auf eine Temperatur erwärmt werden, so dass die Metallschichten zumindest plastifizieren und die Blechteile in diesem Zustand mit einer Kraft derart gegeneinander gedrückt werden, dass der zumindest plastifizierte metallische Werkstoff des Verbundblechteils senkrecht zur einwirkenden Kraft verdrängt wird.

6. Verfahren nach Anspruch 5,
**dadurch gekennzeichnet, dass**
das Verbundblechteil mit einem zweiten Blechteil aus einem metallischen Vollmaterial im Stumpfstoß verschweißt wird und der metallische Werkstoff des zweiten Blechteils in die Kunststoffschicht und gegen die Metallschichten des Verbundblechteils gestaucht wird.

7. Verfahren nach einem der Ansprüche 1 bis 6,
**dadurch gekennzeichnet, dass**
die entstandene Schweißnahtwulst mechanisch entfernt oder bearbeitet wird.

8. Verfahren nach einem der Ansprüche 1 bis 7,
**dadurch gekennzeichnet, dass**
das Verbundblechteil aus Stahlschichten mit einer Dicke von 0,25 mm bis 1,5 mm und einer Kunststoffschicht mit einer Dicke von 20 µm bis 200 µm, vorzugsweise 80 µm bis 150 µm besteht.

## Claims

1. Method for welding a first composite sheet metal part (1) comprising at least two metal layers (2) and a plastic layer (3) arranged between both metal layers, to a second sheet metal part (5) consisting of a solid metallic material or a further composite sheet metal part (8) with at least two metal layers (2') and a plastic layer (3') arranged between the metal layers, **characterized in that** the sheet metal parts are welded using a high-frequency welding method, wherein in high-frequency welding, a high-frequency alternating current is generated in the composite part.

2. Method according to claim 1, **characterized in that** the high-frequency welding method is carried out conductively or inductively.

3. Method according to claim 1 or 2, **characterized in that** the composite sheet metal part (1) and the second sheet metal part (5, 8) are strip-shaped and the welding of the sheet metal parts (1, 5, 8) is carried out continuously in a strip-wise manner.

4. Method according to any one of claims 1 to 3, **characterized in that** the welding is carried out by butt joint or by T-joint.

5. Method according to any one of claims 1 to 4, **characterized in that** the edge surfaces of the composite sheet metal part and those of the further sheet metal parts are heated at the weld joint edges to a temperature so that the metal layers are at least plasticized and the sheet metal parts can be pressed together in this state with a force in such a way that the at least plasticized metallic material of the composite sheet metal part is displaced perpendicularly to the applied force.

6. Method according to claim 5, **characterized in that** the composite sheet metal part is welded to a second sheet metal part of a solid metallic material by butt joint and the metallic material of the second sheet metal part is compressed into the plastic layer and against the metal layers of the composite sheet metal part.

7. Method according to any one of claims 1 to 6, **characterized in that** the resultant weld seam bulge is mechanically removed or machined.

8. Method according to any one of claims 1 to 7, **characterized in that** the composite sheet metal part consists of steel layers with a thickness of 0.25 mm to 1.5 mm and a plastic layer with a thickness of 20 µm to 200 µm, preferably 80 µm to 150 µm.

## Revendications

1. Procédé de soudage d'une première pièce en tôle composite (1) comprenant au moins deux couches métalliques (2) et une couche plastique (3) disposée entre les deux couches métalliques, avec une seconde pièce en tôle (5) composée d'un matériau métallique plein ou une autre pièce en tôle composite (8) avec au moins deux couches métalliques (2') et une couche plastique (3') disposée entre les deux couches métalliques,
**caractérisé en ce que**
les pièces en tôle sont soudées en utilisant un procédé de soudage à haute fréquence, dans lequel un courant alternatif à haute fréquence étant généré dans la pièce composite.

2. Procédé selon la revendication 1,
**caractérisé en ce que**
le procédé de soudage à haute fréquence est réalisé de manière conductive ou inductive.

3. Procédé selon la revendication 1 ou 2,
**caractérisé en ce que**
la pièce composite en tôle (1) et la seconde pièce en tôle (5, 8) sont en forme de bande et que le soudage des pièces en tôle (1, 5, 8) est réalisé en bande de fa çon continue.

4. Procédé selon une des revendications 1 à 3,
**caractérisé en ce que**
le soudage est effectué sous forme de jointure bout à bout ou de jointure en T.

5. Procédé selon une des revendications 1 à 4,
**caractérisé en ce que**
les surfaces des bords de la pièce en tôle composite et celles des autres pièces en tôle sont chauffées au niveau des arêtes de jointure de soudage à une température telle que les couches métalliques au moins se plastifient et que les pièces en tôle dans cet état soient comprimées les unes contre les autres par une force telle que le matériau métallique au moins plastifié de la pièce composite en tôle soit refoulé perpendiculairement à la force agissante.

6. Procédé selon la revendication 5,
**caractérisé en ce que**
la pièce en tôle composite est soudée bout à bout avec une seconde pièce en tôle composée d'un matériau métallique plein et le matériau métallique de la seconde pièce en tôle est comprimé dans la couche plastique et contre les couches métalliques de la pièce en tôle composite.

7. Procédé selon une des revendications 1 à 6,
**caractérisé en ce que**
le bourrelet résultante de la ligne de soudage est éliminé ou usiné mécaniquement.

8. Procédé selon une des revendications 1 à 7,
**caractérisé en ce que**
la pièce en tôle composite est composée de couches d'acier d'une épaisseur de 0,25 mm à 1,5 mm et d'une couche de matière plastique d'une épaisseur de 20 µm à 200 µm, de préférence 80 µm à 150 µm.
